(19) Europäisches Patentamt
European Patent Office
Office européen des brevets

(11) EP 2 138 543 A1

(12) EUROPEAN PATENT APPLICATION
published in accordance with Art. 153(4) EPC

(43) Date of publication:
**30.12.2009 Bulletin 2009/53**

(21) Application number: **08739739.4**

(22) Date of filing: **27.03.2008**

(51) Int Cl.:
***C08L 67/04*** (2006.01) ***C08G 63/06*** (2006.01)
***D01F 6/62*** (2006.01) ***C08L 101/16*** (2006.01)

(86) International application number:
**PCT/JP2008/056629**

(87) International publication number:
**WO 2008/123565 (16.10.2008 Gazette 2008/42)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.03.2007 JP 2007092153**
**30.03.2007 JP 2007093077**

(71) Applicant: **Teijin Limited**
**Osaka-shi, Osaka 541-0054 (JP)**

(72) Inventors:
- **SUZUKI, Hirotaka**
**Iwakuni-shi**
**Yamaguchi 740-0014 (JP)**
- **IKEGAME, Midori**
**Iwakuni-shi**
**Yamaguchi 740-0014 (JP)**

(74) Representative: **Hallybone, Huw George et al**
**Carpmaels & Ransford**
**43-45 Bloomsbury Square**
**London WC1A 2RA (GB)**

# (54) POLYLACTIC ACID COMPOSITION AND FIBER COMPOSED OF THE SAME

(57) A polylactic acid composition wherein a ratio (L/D) of an L-lactic acid unit and a D-lactic acid unit is from 30/70 to 70/30; a weight average molecular weight (Mw) is from 100, 000 to 300, 000; a stereocomplex crystal content (S) is 80% or more; a melting point (Tm) of a stereocomplex crystal is 200°C or higher; and a degree of randomization (R) is from 0.001 to less than 2.5%, and a fiber thereof.

Fig. 1

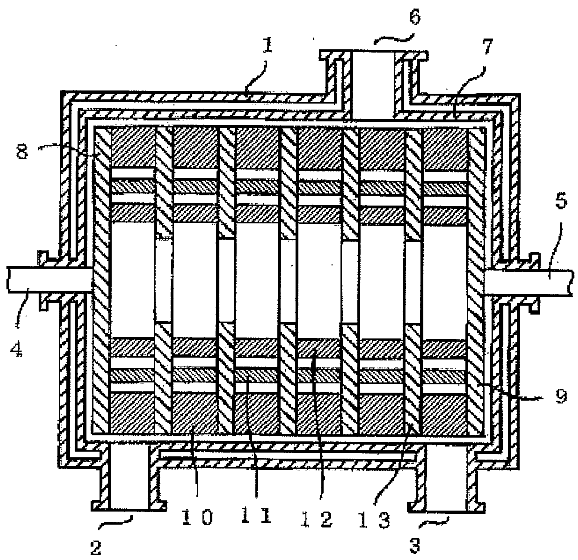




Printed by Jouve, 75001 PARIS (FR)

## Description

### Technical Field

The present invention relates to a polylactic acid composition having excellent heat resistance and having stereocomplex crystals highly formed therein, and a method for producing the same. More particularly, it relates to a polylactic acid composition in which only stereocomplex crystals are restored even by repeating melting and crystallization, and a method for producing the same.
The present invention further relates to a polylactic acid fiber that has practical strength and heat resistance, has a small number of fluff, is suitable to post-processing or production of fiber products and is economically advantageous, and a method for producing the same.

### Background Art

From environmental problems such as global warming, concern to oil depletion, supply circumstances of oil-producing country, and the like, oil price are soaring and development of non-petroleum resins is required. Of those non-petroleum resins, polylactic acid not only has the possibility that can be alternatives of petroleum resins, but has the characteristic in optical properties such as transparency and low refractive index. Development of uses utilizing the characteristic is expected.
However, polylactic acid has a low melting point of about 160°C, and has had the problem in heat resistance such as fusion or deformation. Furthermore, biodegradability and degradation under moist heat environment proceed in a relatively high rate, and there is the problem on stability of physical properties. Thus, polylactic acid has had the defect of its limited use.
On the other hand, it is known that polylactic acid having stereocomplex crystals is obtained by mixing poly(L-lactic acid) comprising an L-lactic acid unit and poly (D-lactic acid) comprising a D-lactic acid unit in a solution or molten state (Patent Document 1 and Non-Patent Document 1). This stereocomplex polylactic acid has a crystal fusion temperature of from 200 to 230°C which is a high melting point as compared with that of poly (L-lactic acid) and poly (D-lactic acid), and an interesting phenomenon showing high crystallizability is discovered.
Use of stereocomplex polylactic acid makes it possible to use a resin in high temperature processing, heat-resistant uses and the like, and improvement of biodegradability and degradation under moist heat environment, long life in high transparent films such as optical films or packaging films utilizing its transparency, and the like are expected.
However, in general, stereocomplex polylactic acid does not show a single crystal of stereocomplex polylactic acid, and is a mixed composition of homocrystal segments of poly(L-lactic acid) alone and poly(D-lactic acid) alone, and a stereocomplex crystal segment. In DSC measurement, two peaks of a fusion peak due to crystals having a low melting point of 190°C or lower corresponding to fusion of homocrystals and a fusion peak due to crystal having a high melting point of 190°C or higher corresponding to fusion of stereocomplex crystals are generally measured. In particular, in a high molecular weight region, it is impossible to obtain stereocomplex polylactic acid by melt kneading.
Specifically, the stereocomplex polylactic acid is that stereocomplex crystals and homocrystals are co-present, and therefore has the problem that the inherent heat resistance of the stereocomplex polylactic acid is difficult to be exhibited. To this problem, use of a nucleating agent for crystallization such as phosphoric ester metal salts is proposed and a heat-resistant containing no homocrystals but only stereocomplex crystals having a crystal melting point of 200°C or higher and a molded article thereof are proposed (Patent Document 2). However, where such a nucleating agent is used, it rises a new problem that a weight average molecular weight (Mw) of polylactic acid is decreased at the time of melting, and its resolution is waited.
Patent Document 3 teaches a method for producing a multiblock copolymer having three or more segments comprising poly (L-lactic acid) and poly (D-lactic acid), having Mw of less than 100,000 and having a relatively short chain length. The copolymer is considered to be stereocomplex polylactic acid containing only stereocomplex crystals. However, this method requires to repeatedly carry out too detailed reprecipitation and drying treatment to remove a monomer every increase of the number of blocks of a copolymer. Furthermore, this method has the disadvantage that apart from the degree of randomization attributable to optical purity of L- and D-lactic acids, the degree of randomization is increased to 2 or more due to L/D random structure formed at the time of forming a block structure, and melting point, crystallizability and stereocomplex crystal content become impaired. Where a blocking reaction is carried out in the same vertical reaction apparatus, if cleaning of the apparatus is not conducted every reaction and a reaction cycle is repeated, the problems become remarkable that the degree of randomization is gradually increased by the influence of the previous cycle, and melting point and crystallizability of polylactic acid become impaired.
Where cleaning operation is frequently repeated, the problems on solvent cost and cleaning cost are generated. Furthermore, where the reaction is conducted by connecting plural reaction apparatuses, the problem on randomization is solved to a certain extent, but regarding its practical realization, the problems to be solved, such as production cost

and productivity, are not small.

Regarding a polylactic acid fiber, Patent Document 1 proposes melt spinning using a composition containing poly(L-lactic acid) and poly(D-lactic acid) in equimolar amount, and discloses a stereocomplex polylactic acid fiber. Strength of the fiber obtained is about 0. 5 cN/dTex, and a fiber having practical strength is not yet obtained.

Non-Patent Document 2 discloses that a stereocomplex polylactic acid fiber was obtained by melt spinning. In this document, a stereocomplex polylactic acid fiber is obtained by heat fixing an unstretched yarn obtained by melt spinning a molten blend of poly (L-lactic acid) and poly (D-lactic acid), but molecular orientation relaxes at the time of heat fixation, and as a result, strength of the fiber obtained remains at most 2.3 cN/dTex.

The conventional methods for forming a stereocomplex fiber, including those literatures, are that an amorphous unstretched yarn obtained by melt spinning a blend of poly(L-lactic acid) and poly(D-lactic acid) is stretched and heat fixed, and based on the principle that it is efficient to heat fix a fiber at a temperature higher than the melting point of poly(D-lactic acid) or poly(L-lactic acid) single crystal in order to sufficiently grow stereocomplex at that time, it was the main trend that the heat fixation is carried out at a temperature higher than the melting point of the above single crystal.

This high temperature heat fixation was effective for the formation of stereocomplex crystals, but there was the problem such that partial fusion, coarse curing and low strength of a yarn due to fusion of a single crystal in the heat treatment step are generated.

As a result of investigations of spinning conditions to this problem, for example, Patent Document 4 proposes a method of forming a stereocomplex crystal from a polylactic acid melt at once on a spinning line by high speed spinning of a spinning rate of 5,000 m/min or more, defines a stereocomplex crystal content which is the proportion of stereocomplex crystallization to the case that a sample is completely crystallized into stereocomplex by a wide-angle X-ray diffraction method (XRD) measurement, and proposes the resolution of the problems such as fiber strength, partial fusion of a yarn, and 170°C ironing heat resistance by conducting 1.4 to 2.3 times (multistage) stretching of a crystallized unstretched yarn having the stereocomplex crystal content of from 10 to 35%.

However, even though the ironing temperature is controlled to 170°C, the temperature may actually be about 175°C, and it is judged that heat resistance at further high temperature is practically necessary. In addition, stretching of a crystallized unstretched yarn has the problem in stretching and orientation, and the problem that a fiber structure becomes loose is pointed out. Furthermore, to carry out the method of Patent Document 4, spinning velocity of about 3, 000 m/min is insufficient, and specific spinning facilities for spinning at a spinning velocity of 5, 000 m/min or more are required. Thus, the problems that should be overcome to carry out industrially inexpensively still remain.

Patent Document 5 proposes a method of taking up an unstretched yarn melt spun under high draft conditions and then stretching the yarn, or stretching the yarn without taking up, and then heat fixing the same. The fiber obtained by this proposal shows two peaks of a polylactic acid homocrystal and a stereocomplex crystal by DSC measurement. Therefore, due to fusion of the single crystal, 170°C ironing heat resistance is still insufficient, and it has to be judged that heat resistance at a temperature exceeding 170°C is insufficient.

Proposal of preparing a fiber having a stereocomplex crystal content (S) of 90% or more, strength higher than that of an unstretched yarn having a stereocomplex crystallization ratio (Cr) by (XRD) measurement of 0%, and high heat resistance exceeding 170°C is not still made, including Patent Document 5.

Furthermore, it is judged that even the multiblock copolymer described in Patent Document 3 has a weight average molecular weight of less than 100,000, and therefore has the problem to obtain a polylactic acid fiber having practical strength and elongation.

As described above, even in a method of investigating spinning and stretching conditions, and even in a method of investigating a polymer higher structure, development of a stereocomplex polylactic acid fiber having high strength and high heat resistance exceeding 170°C which is practically useful, in a method that can easily be carried out practically is expected.

[Patent Document 1] JP-A-63-241024
[Patent Document 2] JP-A-2003-192884
[Patent Document 3] JP-A-2002-356543
[Patent Document 4] JP-A-2003-293220
[Patent Document 5] JP-A-2005-23512
[Non-Patent Document 1] Macromolecules, 24, 5651 (1991)
[Non-Patent Document 2] Seni Gakkai Preprints (1989)

Disclosure of the Invention

An object of the present invention is to provide a polylactic acid composition having excellent heat resistance and having stereocomplex crystals highly formed therein, and a method for producing the same, and the object can be achieved by a polylactic acid composition wherein

(i) a ratio (L/D) of an L-lactic acid unit and a D-lactic acid unit is from 30/70 to 70/30;
(ii) a weight average molecular weight (Mw) is from 100,000 to 300,000;
(iii) a stereocomplex crystal content (S) is 80% or more;
(iv) a melting point (Tm) of a stereocomplex crystal is 200°C or higher; and
(v) a degree of randomization (R) is from 0.001 to less than 2.5%,

wherein the stereocomplex crystal content (S) is a value represented by the following formula:

$$S=\{\Delta Hb/(\Delta Ha+\Delta Hb)\}\times 100(\%)$$

wherein ΔHa and ΔHb are fusion enthalpy (ΔHa) of crystal melting point appeared at a temperature in a range of from 150°C to less than 190°C and fusion enthalpy (ΔHb) of crystal melting point appeared at a temperature in a range of from 190°C to less than 250°C, in a temperature-rising process of a differential scanning calorimeter (DCS), respectively; and
the degree of randomization (R) is a value represented by the following formula:

$$R=\{1-(P1/P2)\}\times 100(\%)$$

wherein P1 and P2 are integral intensity of III tetrad peak in chemical shift of 5.175 ppm and total integral intensity of tetrad (SIS, SII,IIS and ISI) of a methane proton peak appeared in chemical shift of 5.250 to 5. 159 ppm, in homonuclear decoupling $^1$H-NMR of a polylactic acid composition measured in a mixed solution of 10 wt% deuterated chloroform/ 1,1,1,2,2,2- hexafluoro-2-propanol =9/1; and in the tetrad, S means syndiotactic diad, and I means isotactic diad.

Another object of the invention is to provide a polylactic acid fiber that has practical strength and heat resistance, has a small number of fluff, is suitable for post-processing or production of fiber products, and is economically advantageous, and a method for producing the same.

The object can be achieved by a polylactic acid fiber comprising the above polylactic acid composition, showing only a single fusion peak derived from a stereocomplex crystal in a differential scanning calorimeter (DSC) measurement, having fusion heat of from 40 to 80 J/g and fusion peak temperature of 195°C or higher, and satisfying the following requirements:

1) the number of fluff is less than 10 in terms of fiber length of 1,000 meters;
2) 175°C ironing resistance is satisfied;
3) strength is 3.5 cN/dTex or more, and elongation is from 25 to 50%; and
4) a stereocomplex crystallization ratio (Cr) by a wide-angle X-ray diffraction method (XRD) measurement is 90% or more, wherein the stereocomplex crystallization ratio (Cr) is a value represented by the following formula:

$$\text{Cr ratio }(\%)=\Sigma I_{SCi}/(\Sigma I_{SCi}+I_{HM})\times 100 \qquad (1)$$

wherein $\Sigma I_{SCi}=I_{sc1}+I_{sc2}I_{sc3}$ wherein $I_{sci}$ (i=1 to 3) is integral intensity of each diffraction peak in the vicinity of 2θ=12.0°, 20.7° and 24.0°, respectively, and $I_{HM}$ is integral intensity of a diffraction peak derived from a polylactic acid homocrystal.

Brief Description of the Drawings

Fig. 1 is one example of a side sectional view of a shaftless cage type reaction apparatus used in the present invention.
Fig. 2 is a front view of an opening disk (13) of a shaftless cage type reaction apparatus used in the invention.

Best Mode for Carrying Out the Invention

The mode for carrying out the present invention is described in detail below. Those description and Examples

are to illustrate the invention, and do not limit the scope of the invention.

Polylactic acid composition

The polylactic acid composition of the invention contains an L-lactic acid unit and a D-lactic acid unit, represented by the following formula:

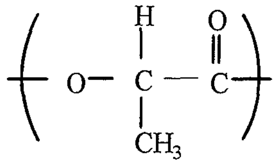

The ratio (L/D) of the L-lactic acid unit and the D-lactic acid unit is from 30/70 to 70/30, and preferably from 40/60 to 60/40. Where the L/D deviates from the above range and optical purity is biased, the crystallinity of the polylactic acid composition is markedly decreased, and this is not preferred.
The polylactic acid composition of the invention has a weight average molecular weight (Mw) of from 100, 000 to 300, 000, preferably from 130,000 to 300,000, more preferably from 150,000 to 300,000, and further preferably from 170,000 to 250,000. The weight average molecular weight (Mw) is a value of a standard polystyrene convention by a gel permeation chromatography (GPC) measurement using chloroform as an eluent.
The polylactic acid composition of the invention has a stereocomplex crystal content (S) of 80% or more, preferably 95% or more, and more preferably 100%. The stereocomplex crystal content (S) is a value represented by the following formula:

$$S=\{\Delta Hb/(\Delta Ha+\Delta Hb)\}\times 100(\%) \qquad (1)$$

wherein ΔHa and ΔHb are fusion enthalpy (ΔHa) of crystal melting point appeared at a temperature in a range of from 150°C to less than 190°C and fusion enthalpy (ΔHb) of crystal melting point appeared at a temperature in a range of from 190°C to less than 250°C, in a temperature-rising process of a differential scanning calorimeter (DCS), respectively.
The ΔHa is preferably less than 4 J/g, and more preferably less than 2 J/g. The ΔHb is preferably 20 J/g or more, more preferably 30 J/g or more, and further preferably 40 J/g or more.
The polylactic acid composition of the invention is that in the DSC measurement, even though a program comprising a temperature-rising process of from 20 to 250°C and a quenching process of from 250°C to 20°C is repeated three times or more, the crystal melting point (Tm) observed in the temperature-rising process is from 190 to less than 250°C. In other words, it means that even though melting and crystallization are repeated, only a stereocomplex crystal grows.
The melting point (Tm) of the stereocomplex crystal of the polylactic acid composition of the invention in the DSC measurement is 200°C or higher, preferably from 200 to 250°C, and more preferably from 200 to 225°C.
The polylactic acid composition of the invention has the degree of randomization (R) of from 0.001 to less than 2.5%, preferably from 0.001 to 2%, and more preferably from 0.001 to 1%. The degree of randomization (R) is a value represented by the following formula:

$$R=\{1-(P1/P2)\}\times 100(\%)$$

wherein P1 and P2 are integral intensity of III tetrad peak in chemical shift of 5.175 ppm and total integral intensity of tetrad (SIS, SII, IIS, III and ISI) of a methane proton peak appeared in chemical shift of 5.250 to 5 .159 ppm, in homonuclear decoupling $^1$H-NMR of a polylactic acid composition measured in a mixed solution of 10 wt% deuterated chloroform/ 1,1,1,2,2,2- hexafluoro-2-propanol =9/1; and in the tetrad, S means syndiotactic diad, and I means isotactic diad.
The total content of L-lactide and D-lactide in the polylactic acid composition of the invention is preferably from

100 to 10,000 ppm.

Production method of polylactic acid composition

The polylactic acid composition of the invention can be produced by the following steps (1) to (4).

Step (1):

Step (1) is a step of obtaining a prepolymer by polymerizing lactic acid (A) or lactide (A). The lactic acid (A) is L-lactic acid or D-lactic acid. The lactide (A) is L-lactide or D-lactide.

The prepolymer can be produced by, for example, a method of directly dehydration condensing L- or D-lactic acid; a method of solid phase polymerizing L- or D-lactic acid oligomer; or a method of dehydration cyclizing L or D-lactic acid to form lactide, and then melt ring-opening polymerizing the lactide.

Step (1) is preferably a step of obtaining a prepolymer by a direct polycondensation of the lactic acid (A) or melt ring-opening polymerization of the lactide (A). Particularly, a method of melt ring-opening polymerization is preferable.

The conventional production apparatuses can be used in those polymerization methods. Examples of the apparatus used include vertical stirring apparatuses and horizontal stirring apparatuses, such as a single-screw or twin-screw extruder, a kneader, a shaftless cage type stirring tank, "BIVOLAK" a product of Sumitomo Heavy Industries, Ltd., N-SCR, a product of Mitsubishi Heavy Industries, Ltd., and spectacle-shaped blade, lattice-shaped blade or Kenix-type stirring machine, a product of Hitachi, Ltd. Those can be use alone or in parallel.

Where the prepolymer is produced by the melt ring-opening polymerization method, alcohols may be used as a polymerization initiator. It is preferred that the alcohols do not disturb polymerization of a prepolymer and are nonvolatile, and decanol, dodecanol, tetradecanol, hexadecanol, octadecanol, ethylene glycol, 1,3-butanediol, 1,4-butanediol and the like can preferably be used.

The prepolymer is poly(L-lactic acid) mainly containing an L-lactic acid unit or poly(D-lactic acid) mainly containing a D-lactic acid unit. The poly(L-lactic acid) contains an L-lactic acid unit in an amount of preferably 90 mol% or more, more preferably 95 mol% or more, and further preferably 98 mol% or more. The poly (D-lactic acid) contains a D-lactic acid unit in an amount of preferably 90 mol% or more, more preferably 95 mol% or more, and further preferably 98 mol% or more. Other units are optical antipodes and units other than lactic acid. The amount of the other units is preferably from 0 to 10 mol%, more preferably from 0 to 5 mol%, and further preferably from 0 to 2 mol%.

Examples of the unit other than lactic acid include units derived from dicarboxylic acid, polyhydric alcohol, hydroxycarboxylic acid, lactone or the like, having at least two ester bond-forming functional groups, and units derived from various polyesters, various polyethers, various polycarbonates or the like, comprising those various constituents. Examples of the dicarboxylic acid include succinic acid, adipic acid, azelaic acid, sebacic acid, terephthalic acid and isophthalic acid. Examples of the polyhydric alcohol include aliphatic polyhydric alcohols such as ethylene glycol, propylene glycol, butanediol, pentanediol, hexanediol, octanediol, glycerin, sorbitan, neopentyl glycol, diehtylene glycol, triethylene glycol, polyethylene glycol or polypropylene glycol, and aromatic polyhydric alcohols such as compounds comprising bisphenol having added thereto ethylene oxide. Examples of the hydroxycarboxylic acid include glycolic acid and hydroxylbutyric acid. Examples of the lactone include glycolide, ε-caprolactone glycolide, ε-caprolactone, β-propiolactone, δ-butyrolactone and β- or γ-valerolactone, pivalolactone and δ-valerolactone.

Reactive terminal group of the prepolymer can use any group so long as it is a functional group that initiates a ring-opening reaction of lactide. Above all, a hydroxyl group and a carboxyl group, particularly a hydroxyl group, are preferred from the points of reaction activity, color tone of the polylactic acid composition, and other properties. The number of the reactive terminal group in the prepolymer is required to be at least one in one molecule of the prepolymer. Even when the number of the reactive functional group is 3 or more, it is possible to produce a block polymer. However, such a block polymer is a branched polymer. Therefore, such a prepolymer is preferably used for, for example, improving special properties such as flowability, but to achieve the object of the invention, the number of functional group in one molecule of the prepolymer is preferably 1 or 2.

The total content of D-lactic acid and L-lactic acid in the prepolymer is preferably 500 ppm or less, more preferably 300 ppm or less, further preferably 200 ppm or less, and particularly preferably 100 ppm or less. The total content of D-lactide and L-lactide in the prepolymer is preferably from 1 to 10, 000 ppm, more preferably from 1 to 5, 000 ppm, and further preferably from 1 to 500 ppm.

When the total content of D-lactic acid and L-lactic acid, or the total content of L-lactide and D-lactide is satisfied with the above range, the degree of randomization (R) of the polylactic acid composition of the invention can be from 0.001 to less than 2.5%, and preferably from 0.001 to less than 1%. Where the degree of randomization exceeds 2.5%, the problems are caused such that the stereocomplex crystal melting point (Tm) is lower than 200°C, and the stereocomplex crystal itself is decreased, and approaches an amorphous state.

The prepolymer has a weight average molecular weight (M) of preferably from 30,000 to 200,000, more preferably from 50,000 to 200,000, and further preferably from 80,000 to 180, 000. Where the molecular weight of the prepolymer exceeds the range and the prepolymer has a high molecular weight, a block forming reaction is difficult to proceed, and where the molecular weight is less than 30,000, the degree of randomization of the polylactic acid composition is increased to 2.5% or more.
Therefore, it is preferred that the reactive terminal group of the prepolymer is a hydroxyl group or a carboxyl group, the weight average molecular weigh is from 30,000 to 200,000, the total content of L-lactic acid and D-lactic acid is 500 ppm or less, and the total content of L-lactide and D-lactide is from 1 to 10,000 ppm.

Step (2):

Step (2) is a step of removing residual lactide in the prepolymer. Removal of the residual lactide is carried out at a temperature of from 180 to 260°C, preferably from 200 to 240°C, and more preferably from 210 to 230°C. Where the temperature condition is lower than the above, lactide removal efficiency is poor, and the problem arises that the prepolymer is crystallized as the case may be. Conversely, in the range exceeding 260°C, inherent depolymerization of the prepolymer is remarkable, resulting in increase of the amount of lactide. Furthermore, the lactide removal is carried out under a reduced pressure of from 1 to 13.3 kPa. Where the lactide removal is carried out under a pressure lower than 1 kPa, the above-described depolymerization is accelerated by the principle of equilibrium. Conversely, where the lactide removal is conducted under a pressure exceeding 13.3 kPa, long time is required to achieve the object, and this arises molecular weight and coloration of the prepolymer.
Therefore, step (2) is preferably conducted at a temperature of from 180 to 260°C under a pressure of from 1 to 13.3 kPa.

Step (3):

Step (3) is a step of polymerizing a lactide (B) to obtain a polylactic acid composition.
Step (3) is conducted at a temperature of from 190°C to 280°C for from 10 minutes to 10 hours.
A lactic acid unit constituting the lactic acid (A) or the lactide (A), and a lactic acid unit constituting the lactide (B) are optical antipodes. That is, when the lactic acid (A) is L-lactic acid or L-lactide, the lactide (B) is D-lactide. When the lactic acid (A) is D-lactic acid or D-lactide, the lactide (B) is L-lactide.
The polymerization is preferably conducted by a melt ring-opening polymerization method. Step (3) is preferably produced by a melt ring-opening polymerization method of a lactide using the prepolymer as an initiator in the presence of a metal catalyst.
Examples of the metal catalyst used include compounds containing at least one metal element selected from the group consisting of alkaline earth metals, rare earth metals, transition metals of the third period, aluminum, germanium, tin and antimony. Examples of the alkaline earth metal include magnesium, calcium and strontium. Examples of the rare earth element include scandium, yttrium, lanthanum and cerium. Examples of the transition metal of the third period include iron, cobalt, nickel, zinc and titanium. The metal catalyst can be added to the composition as carboxylic acid salts, alkoxides, aryloxides or β-ketone enolates of those metals. Where polymerization activity and color tone are considered, tin octylate, titanium tetraisopropoxide and aluminum triisopropoxide are particularly preferred.
The amount of the catalyst added is preferably from 0.001 to less than 0.1 part by weight, and more preferably from 0.003 to less than 0.1 parts by weight, per 100 parts by weight of the lactide. Where the catalyst addition amount is fallen outside the above range, long time is required for polymerization, or melt stability of the polylactic acid composition obtained is poor. Addition atmosphere is preferably an inert gas atmosphere such as nitrogen or argon.
The reaction temperature is from 190 to 280°C, and preferably from 200 to 260°C. Where the polymerization is carried out outside the above reaction time and temperature ranges, long time is required for polymerization of the polylactic acid composition obtained, and coloration is remarkable during the time. Where the temperature is lower than 190°C, the block polymer forms a stereocomplex crystal during the reaction, and there is high possibility of solidification. Where the temperature exceeds 280°C, depolymerization is remarkable.
The reaction time is from 10 minutes to 10 hours, preferably from 30 minutes to 5 hours, and more preferably from 1 to 3 hours. Where the reaction time is shorter than the above range, the block polymer does not sufficiently grow, and where the reaction time is longer than the above range, it is difficult to obtain a high molecular weight block polymer due to decrease of a molecular weight.
The amount of the lactide is from 30 to less than 200 parts by weight, and preferably from 50 to less than 150 parts by weight, per 100 parts by weight of the prepolymer. Where the addition amount is fallen outside the above range, a block copolymer is not formed, and there is the case that only homopoly (L-lactic acid) or homopoly (D-lactic acid) is formed.
It is preferred that the metal catalyst in the polylactic acid composition is inactivated by the conventional methods

such as a method of cleaning and removing with a solvent or a method of using a catalyst deactivator to deactivate catalyst activity, for suppression of the decrease of a weight average molecular weight and melt stability, of the polylactic acid composition.

The conventional agents are preferably used as the deactivator, and the following compounds are illustrated as the preferred compounds.

Compounds containing at least one selected from the group consisting of organic ligands comprising a group of chelate ligands capable of coordinating to a specific metal polymerization catalyst, phosphorus oxo acids, phosphorus oxo esters and organophosphorus oxo acid compounds. The compound is added in an amount of from 1 to 200 equivalents per one equivalent of metal element in the metal catalyst.

Step (4):

Step (4) is a step of removing residual lactide in the polylactic acid composition.

Step (4) is conducted at a temperature of from 180 to 260°C under a pressure of from 1 to 13.3 kPa.

It is preferred to remove residual lactide even after the production of the polylactic acid composition from the standpoints of melt stability and long-term preservability of the polylactic acid composition.

Shaftless cage type reaction apparatus:

In the invention, steps (2) to (4) are conducted using a cylindrical shaftless cage type reaction apparatus having the following (a) to (e):

(a) an inlet and an outlet of a reaction substance in the vicinity of both edges,
(b) rotatable edge disks provided at both edges in the reaction apparatus so as to face with each other,
(c) apertured disks having an aperture at the central portion thereof, provided between the edge disks,
(d) stirring blades provided between the edge disk and the apertured disk and between the apertured disks, and provided so as to closely contact with or come close to the inner peripheral wall face of the reaction apparatus along a longitudinal direction of the shaftless cage type reaction apparatus, and
(e) free surface-forming members provided on an extended line of the stirring blade toward inside the reaction apparatus.

When such a shaftless cage type reaction apparatus is operated under the above conditions, a polylactic acid composition that is economically advantageous, has small randomization and has a stereocomplex crystal highly formed therein can be produced.

The shaftless cage type reaction apparatus is described in detail below by referring to the drawings. Fig. 1 is a side sectional view illustrating a horizontal reaction tank for carrying out the invention.

In Fig. 1, 1 is a horizontal reaction tank body, 2 is an inlet of a substance to be reacted, and 3 is an outlet of a substance to be reacted. The inlet and outlet are provided at the both edges or in the vicinity of both edges of the reaction tank 1, as shown in Fig. 1. 4 and 5 are shafts provided at the both sides of the reaction tank 1. 6 is an exhaust port which is opened on the upper side of an outer shell of the reaction tank, and if necessary, combines a suction port for maintaining the inside of the reaction tank in a reduced pressure. 7 is an inner peripheral wall face of the reaction tank 1, and according to need, can be provided with projections on the inner peripheral wall face 7 so as not to interfere with the stirring blade 10.

In Fig. 1, 8 and 9 are edge disks, and are fixed to shafts 4 and 5. The edge disks 8 and 9 can be rotated by driving the shafts 4 and 5 by the power of a driving apparatus (not shown) . 10 is a stirring blade provided to closely contact with or become close to the inner peripheral wall face 7 in a longitudinal direction thereof. 11 and 12 are free surface forming members arranged in two rows in parallel to a dropping edge of a reactant of the stirring blade 10.

The stirring blades can be provided spirally. Specifically, the stirring blade sandwiched with apertured disks 13 is provided with an optional angle without providing in parallel to an axial direction of the shafts 4 and 5. Alternatively, the stirring blade itself is provided in parallel to an axial direction of the shafts 4 and 5, and the installation position is displaced with an optional angle from a stirring blade in the adjacent region partitioned with the apertured disk 13 while keeping the same distance from a rotation center, so that the reaction apparatus as a whole has nearly a spiral shape. Furthermore, the above may be combined. By the above installation, a sending effect (or returning effect) of the reactant can be developed. The degree of the sending effect (or returning effect) can be controlled by the spiral shape itself, and additionally rotation speed by a driving apparatus and temperature in the reaction apparatus, according to need.

Fig. 1 illustrates round bars having different diameters. 13 is an apertured disk. The apertured disks 13 are connected and fixed in a longitudinal direction with a given distance by the stirring blade 10 and the round bar 11 and 12 which are the free surface forming member, have an aperture at the central portion thereof, and further have the role

to partition the inside of the reaction tank 1 into plural chambers. 14 is an inlet of an inert gas or steam, 15 is a port for adding a liquid evaporated in the reaction tank. 14 and 15 may provided on an outer shell of the reaction tank, according to need, and furthermore, 14 may be provided on the upper side of the outer shell of the reaction tank.

The round bar 11 and 12 that are the free surface forming member are provided at positions that can contact with at least a part of a reaction liquid dropped along the dropping edge of the stirring blade that the reaction liquid initiates to drop from the stirring blade 10, in plural rows or a single row in nearly parallel to the dropping edge.

The stirring blade 10 is rotated and slanted such that the edge at the side closely contacting with or coming close to the inner peripheral wall face 7 faces downward during rising a vapor phase portion in the reaction tank 1, and the dropping edge opposite the edge faces upward with the stirring blade 10 slanted. It is preferred that the stirring blade 10 is slanted such that the edge at the side closely contacting with or coming close to the inner peripheral wall face 7 faces upward during descending a vapor phase portion in the reaction tank 1, and the dropping edge opposite the edge faces downward. By this, the stirring blade 10 can raise the reaction liquid along the inner peripheral wall face 7 during rising the vapor phase portion in the reaction tank, and flow down the reaction liquid along the surface of the stirring blade 10 during descending. Furthermore, if necessary, the reaction liquid flown down from the stirring blade 10 can be contacted with the free surface forming member. Where the stirring blade 10 is closely contacted with the inner peripheral wall face 7, a tail (not shown) can further be supplementarily provided, and renewal of the reaction liquid adhered to the inner peripheral wall face 7 can be accelerated by this tail.

Fig. 2 is a front view of the apertured disk 13. 10 is a plate-like stirring blade slanted in a direction reverse to the rotation direction, and four stirring blades are provided with every 90° displacement in a circumferential direction of the reaction tank 1. The installation number of the stirring blade 10 can be increased or decreased from four blades according to need. In this case, it is preferred that the installation is equivalent in a circumferential direction. The round bars 11 and 12 as the free surface forming member can be arranged in nearly parallel in two rows, respectively, on the extended line of each stirring blade 10 along the dropping edge of the stirring blade 10. In this case, it is preferred that the diameter of the round bar 12 arranged at a position nearest the rotation center of the stirring blade is larger than that of the round bar 11 arranged at a position far from the rotation center.

Where the diameters of the round bars 11 and 12 are the same or the diameter of the round bar 11 is larger than the diameter of the round bar 12, it is difficult to form a liquid flow of a reactant as a mulilayer film. The reason for this is that in such a case, most reaction liquid frequently drops down from a gap between the stirring blade 10 and the round bar 11 in an integrated form, and it is difficult to sufficiently form the objective and stabilized liquid flow having many free surfaces such as a multilayer film. In place of the round bar, bars having a cross section of a polygonal shape, an oval shape, an elliptical shape or the like can be used, and plate-like bodies such as a plane plate or a curved plate can be used. Furthermore, the plate-like body can be made in a lattice shape or a net shape, and further can be formed into a perforated plate. Even in this case, needless to say, it is preferred to form conditions that many free surfaces are formed when the reaction liquid flows down. Therefore, needless to say, a free surface forming member is used, which is considered such that the free surface is not reduced by that liquid is integrated when flowing down.

Conditions such as the number, shape and size of the stirring blade and free surface forming member, and distance of installation vary depending on the production conditions and the like. However, it is important that under those conditions, the liquid flow dropped is contacted with the free surface forming member and is flown down while forming liquid flow having large free surface area, such as a multilayer film. Where melt viscosity of the reaction liquid varies from the inlet of the reaction tank toward the outlet thereof, it is needless to say that the conditions such as the number, shape and size of the stirring blade and free surface forming member, and distance of installation can be varied according viscosity change.

The horizontal reaction tank has heating means (not shown) for heating to the desired temperature. Therefore, the outer shell of the reaction apparatus can directly be heated with electric heat source. Furthermore, a method of forming an outer shell of a production apparatus into a double jacket structure as shown in Fig. 1, existing an appropriate heating medium such as a heating medium liquid (for example, Dowtherm) or heat medium stream in the jacket, and heating; a method of providing a heat transfer face in a reaction chamber; and the like can appropriately be employed. The heating may be conducted in every reaction chamber partitioned by the aperture disk and/or conducted by dividing the reaction chamber so that each divided region can independently be heated. Two or more reaction chambers can be heated as a unit. Furthermore, according to need, circulating means having a heat exchanger can be provided in the horizontal reaction tank of the invention or separately. The reaction pressure is not particularly limited. The reaction can be conducted under reduced pressure, under atmospheric pressure or under pressure higher than atmospheric pressure.

Other than the shaftless cage type reaction apparatus described above, a single-screw or twin-screw extruder, a kneader, a shaftless cage type stirring tank, "VIBOLAC" a product of Sumitomo Heavy Industries, Ltd., N-SCR, a product of Mitsubishi Heavy Industries, Ltd., spectacle-shaped blade, lattice-shaped blade or Kenix-type stirring machine, a product of Hitachi, Ltd., and the like are known as a continuous reaction apparatus. However, N-SCR, a product of Mitsubishi Heavy Industries, Ltd., is not commercially available. Furthermore, spectacle-shaped blade, lattice-shaped blade or Kenix-type stirring machine, a product of Hitachi, Ltd., has poor self-cleaning properties, and decomposition

deteriorated materials formed on the wall of the reaction apparatus may introduce into products. Therefore, this apparatus is not suitable in the invention.

A single-screw or twin-screw extruder has good self-cleaning properties, but apparatus productivity is poor and there is the problem in economical properties. Therefore, this extruder is also not suitable in the invention.

The reaction in a shaftless cage type reaction apparatus can be conducted in batch manner, but it is easily understood for one skilled in the art that a continuous method is economically advantageous. In addition, the continuous method has the advantages that polymerization reaction close to piston flow can proceed, and by suppressing thermal history of the polylactic acid composition to small dispersion region, the degree of randomization of the polylactic acid composition can be maintained low.

The polylactic acid composition obtained by the invention contains a block polymer having an L-lactic acid block and a D-lactic acid block. According to the method of the invention, a polylactic acid composition having high molecular weight and that only a stereocomplex crystal grows even by repeating melting and crystallization is obtained.

If desired, the polylactic acid composition of the invention can contain general additives, for example, various stabilizers such as antioxidants, light stabilizers, end-capping agents, ultraviolet absorbers or heat stabilizers; various forming aids or property improving agents such as lubricants, release agents, electrostatic adhesion improving agents, plasticizers, various fillers, antistatic agents, flame retardants, foaming agents, fillers, antibacterial agents, mildew-proofing agents, nucleating agents, or colorants including dyes and pigments; various thermoplastic resins other than a polylactic acid; and the like, in an amount such that the object of the invention is not impaired.

<u>Molded article</u>

The polylactic acid composition of the invention can be formed into a molded article having excellent properties by the conventional various molding methods. Examples of the molding method include extrusion molding, inflation molding, blow molding and injection molding. Examples of the molded article include films, sheets and fibers. Those molded articles are excellent in heat resistance, economical properties, transparency, durability and the like.

<u>Polylactic acid fiber</u>

A fiber comprising the polylactic acid composition of the invention as a molded article is described below.

The polylactic acid fiber of the invention is a polylactic acid fiber showing only a single fusion peak derived from a stereocomplex crystal in a differential scanning calorimeter (DSC) measurement, having fusion heat of from 40 to 80 J/g and a fusion peak temperature of 195°C or higher, and satisfying the following requirements:

1) the number of fluff is less than 10 in terms of fiber length of 1,000 meters;
2) 175°C ironing resistance is satisfied;
3) strength is 3.5 cN/dTex or more, and elongation is from 25 to 50%; and
4) a stereocomplex crystallization ratio (Cr ratio) by a wide-angle X-ray diffraction method (XRD) measurement is 90% or more,

wherein the stereocomplex crystallization ratio (Cr ratio) is a value represented by the following formula:

$$\text{Cr ratio } (\%) = \Sigma I_{SCi} / (\Sigma I_{SCi} + I_{HM}) \times 100 \qquad (3)$$

wherein $\Sigma I_{SCi}=I_{sc1}+I_{sc2}I_{sc3}$ wherein $I_{sci}$ (i=1 to 3) is integral intensity of each diffraction peak in the vicinity of 26=12.0°, 20.7° and 24.0°, respectively, and $I_{HM}$ is integral intensity of a diffraction peak derived from a polylactic acid homocrystal.

Each element is described below.

The polylactic acid fiber of the invention substantially shows only a single fusion peak of a stereocomplex crystal in the DSC measurement, has crystal fusion heat of the peak of from 40 to 80 J/g, and has a fusion peak temperature of 195°C or higher.

When the crystal fusion heat of the peak is fallen within the above range, crystallinity of the stereocomplex crystal in the fiber can sufficiently be increased, and it is possible to develop practically durable strength. Furthermore, when the fusion peak temperature is 195°C or higher, 175°C ironing resistance can be possessed.

The polylactic acid fiber of the invention has the number of fluff of less than 10 in terms of fiber length of 1, 000 meters. When the polylactic acid fiber having less number of fluff is further subjected to post-processing such as crimping, such a polylactic acid fiber decreases the problem on process, and fiber products comprising such a fiber have good quality. Thus, this element is very important.

It is necessary that the polylactic acid fiber of the invention is satisfied with the 175°C ironing resistance. The 175°C ironing resistance specified in the invention has larger practical significance as compared with the conventionally proposed 170°C ironing resistance. In particular, this element is preferred to mix the polylactic acid fiber of the invention with the general-purpose fibers such as a polyethylene terephthalate fiber, and is the essential property in the invention.

It is essential that the polylactic acid fiber has strength of 3.5 cN/dTex or more and elongation of from 25 to 50%. The strength is preferably 3.8 cN/dTex or more, and more preferably 4.0 cN/dTex or more. Too large elongation is not preferred, and the upper limit of the elongation is 50%.

In using a fiber as for clothing and industry, a fiber having strength of 4.0 cN/dTex or more and elongation of the above range increases practical use range, and is preferred.

It is preferred that the polylactic acid fiber of the invention has a heat shrinkage percentage at 150°C of from 0.1 to 7%. It is ideal that the shrinkage percentage is 0%. However, it is in actuality difficult to make the shrinkage percentage be 0.1% or less, and it is not necessary to reduce the shrinkage percentage to such a value. Practically, a range of from 0.2 to 6.5%, and more preferably from 0.3 to 6%, is selected.

Where the heat shrinkage percentage is large, when fiber products are exposed to high temperature including ironing, there is concern that the problem rises that fiber products contract to reduce its size and do not withstand to the practical use.

It is further necessary that the polylactic acid fiber of the invention has a Cr ratio by a wide-angle X-ray diffraction method (XRD) measurement of 90% or more, further preferably 95% or more, and more preferably 97% or more, but it is not necessary to be completely 100%.

It is known that a polylactic acid composition comprising a stereocomplex crystal formed therein generally shows at least two endothermic peaks of a low temperature crystal fusion peak of a crystal of a polylactic acid alone and a high temperature crystal fusion peak of a crystal of a stereocomplex polylactic acid in the DSC measurement depending on the preparation conditions and the like. Despite that the Cr ratio by XRD measurement is 90% or more and is not completely 100%, the polylactic acid fiber of the invention substantially shows only a single fusion peak of a stereocomplex polylactic acid crystal by DSC measurement, and has a melting point of 200°C or higher. As a result, cloth quality and texture of fiber products are not impaired by ironing at 175°C.

The polylactic acid fiber of the invention can preferably be obtained by stretching and heat fixing an unstretched yarn having a stereocomplex crystal content (S) of 90% or more and a stereocomplex crystallization ratio (Cr ratio) of substantially zero.

Further preferably, the unstretched yarn has the stereocomplex crystal content (S) of substantially 100% and the stereocomplex crystallization ratio (Cr ratio) of substantially zero.

A stretched yarn obtained from the unstretched yarn having the above stereocomplex crystal content (S) and stereocomplex crystallization ratio (Cr ratio) can preferably exhibit the above properties.

It is **characterized in that** the polylactic acid fiber of the invention is obtained by a melt spinning method. In dry or wet solution spinning, productivity is low from the industrial standpoint, and stability of a solution obtained by blending poly(L-lactic acid) and poly (D-lactic acid) is low. As a result, it is difficult to obtain a stable yarn.

The polylactic acid fiber of the invention can be produced by, for example, the following method. The polylactic acid composition is melted in an extruder type or pressure melter type melt extruder, weighed with a gear pump, filtered in a pack, and then discharged from a nozzle provided in a cap as a monofilament, a multifilament or the like.

To effectively remove solid foreign matters and high viscosity foreign matter in the polylactic acid composition, particularly foreign matters having a diameter exceeding 1 μm that disturb spinning and stretching, it is preferred that the foreign matters are filtered and removed by a sand pack, a metal mesh filter of 100 to 500 mesh or a combination of those.

Breaking of yarn during spinning and stretching, or formation of fluff can be restrained by such a treatment.

Melt spinning of the polylactic acid composition of the invention is conducted in a temperature range of from 220 to 290°C. Preferably, a temperature at which a polylactic acid melts and decomposition of a polylactic acid composition is difficult to occur, that is, a range of from 235 to 280°C, and further preferably a range of from 240 to 270°C, is selected.

Shape of the cap and the number of the cap are not particularly limited, and caps having any fiber cross section of a circular shape, an irregular shape, a solid-core shape, a hollow shape and the like can be used.

The polylactic acid fibers discharged are immediately cooled and solidified, bundled, and after adding an oil solution thereto, taken up as an unstretched yarn.

The cooling is conducted by preferably cold air of 40°C or lower, more preferably cold air of from -10 to 40°C, and further preferably cold air of 0 to 30°C, and it is preferred that a filament yarn cooled is cooled to a crystallization initiation temperature or lower at the position of 3 meters under the cap. By this treatment, growth of a polylactic acid crystal in the filament yarn in an unstretched state can greatly be suppressed.

In the invention, the polylactic acid fiber is taken up as an unstretched yarn at a temperature lower than the glass transition temperature. The take-up speed is preferably in a range of from 300 to 5,000 m/min from that a stereocomplex crystal is liable to be formed. The unstretched yard taken up is then subjected to a stretching step. It is not

always necessary to separate a spinning step and a stretching step, and a direct spinning and stretching method that subsequently conducts stretching without taking up after spinning may be employed.

The stretching may be one-stage stretching, or multistage stretching of two-stage or more. The draw ratio is preferably 3 times or more, and further preferably 4 times or more, from the standpoint of preparation of high strength fiber. Preferably, the draw ratio of from 3 to 10 times is selected. However, where the draw ratio is too high, the fiber devitrifies and whitens. As a result, strength of the fiber may be decreased, or dyeing mottle or the like may be induced, which is not preferred.

Preheating method of stretching includes a tabular or pin-shaped contact heater, a non-contact hot plate, a heat medium bath and the like, in addition to temperature rising of a roll, but methods generally used can be used. The stretching is conducted in a range of from a glass transition temperature of a polylactic acid to a crystal melting point of a homopolylactic acid.

Where the stretching is conducted at a temperature higher than the homocrystal melting point, the homopolylactic acid in an unstretched yarn melts, and orientation crystallization may not proceed appropriately. The drawing temperature is selected from a range of from 70 to 170°C, preferably from 70 to 140°C, and particularly preferably from 80 to 130°C.

Subsequent to the stretching, heat fixation is conducted to fix a fiber structure before take-up of a stretched yarn. The heat fixation can use optional methods such as a hot roller, a contact heater or a non-contact hot plate.

The heat fixation temperature is preferably that the heat fixation is generally conducted at a temperature lower than the melting point of a polymer and at a temperature close to the melting point of a polymer as possible. In the invention, specifically a polylactic acid fiber having ironing resistance and strength of 3.5 cN/dTex or more can be obtained by heat fixing at a temperature of from 170 to 220°C.

In a fiber comprising the polylactic acid composition of the invention, it is not necessary to add an agent for promoting formation of a stereocomplex crystal, for example, a phosphoric ester metal salt, and the stereocomplex crystal can highly be formed by melt kneading. Therefore, an unstretched yarn can suitably be obtained as described before.

Because it is not necessary to add an agent for promoting formation of a stereocomplex crystal, for example, a phosphoric ester metal salt, the amount of metal ions in a polylactic acid can be 100 ppm or less.

The metal ion used herein means at least one metal selected from the group consisting of alkaline earth metals, rare earth elements, transition metals of the third period, aluminum, germanium, tin and antimony.

In general, a phosphoric ester metal salt suitably used for the formation of a stereocomplex crystal of a polylactic acid is sparingly soluble or insoluble in the polylactic acid, and often causes breakage of fibers when spinning and drawing.

The invention does not use such an agent including such a phosphoric ester metal salt, and therefore can suitably suppress fiber breakage when spinning and drawing, and can suitably suppress the number of fluff of a fiber.

It is preferred that the polylactic acid composition applied to melt spinning of the invention has a moisture regain of 100 ppm or less. Where the moisture regain is high, hydrolysis of the polylactic acid composition is accelerated. As a result, not only a molecular weight is remarkably decreased, making it difficult to conduct spinning, but properties of a yarn obtained deteriorate, which is not preferred.

It is preferred to adjust the residual lactide amount in the polylactic acid composition to 400 ppm, and then conduct melt spinning. In the case of the polylactic acid composition obtained by a lactide method, a lactide contained in the polylactic acid composition evaporates at the time of melt spinning, and this may cause yarn mottle. Therefore, it is preferred to suppress the lactide amount to 400 ppm or less from the purpose of obtaining good fiber.

It is preferred that the polylactic acid composition used in the invention has the decrease of a weight average molecular weight when melted at 260°C of 20% or less. Where molecular weight decrease at high temperature is remarkable, not only it is difficult to conduct spinning, but properties of the fiber obtained deteriorate, which is not preferred.

If desired, the polylactic acid fiber of the invention can contain the conventional additives such as plasticizers, antioxidants, light stabilizers, ultraviolet absorbers, heat stabilizers, lubricants, release agents, various fillers, antistatic agents, flame retardants, foaming agents, various fillers, antibacterial and antifungal agents, nucleating agents, or colorants including dyes and pigments, within a range that the object of the invention is not impaired.

The polylactic acid fiber of the invention has a small number of fluff, and can therefore suitably be used as an original yarn for textured yarn such as a pre-twist textured yarn, a mechanical crimp textured yarn or a push crimped yarn. Furthermore, the polylactic acid fiber of the invention can be formed into not only long fibers, but short fibers and spun yarns using the same.

Specifically the polylactic acid fiber of the invention can suitably be used in clothing uses such as shirts, heavy cloth, pants or coats; clothing material uses such as caps or pads, interior uses such as curtains, carpets, mats or furniture; industrial material uses such as belts, nets, ropes, blouson, bags, felts, or filters; and vehicle interior uses.

Examples

The present invention is described specifically by the Examples, but the invention is not construed as being limited thereto.

In the Examples, the following methods were used for various measurements and evaluations.

(1) Measurement of weight average molecular weight (Mw):

Using GPC-11, a product of SHODEX, 50 mg of a composition was dissolved in 5 ml of chloroform, and spread with chloroform of 40°C. A weight average molecular weight (Mw) was calculated as a polystyrene conversion value.

(2) Measurement of DSC:

5 mg of a sample piece was placed on an exclusive aluminum pan, and measured using a differential scanning calorimeter (DSC2920), a product of TA Instruments. Measurement conditions were as follows, and crystal fusion enthalpy was calculated by the area of a region surrounded by a crystal fusion peak and a base line, appeared on DSC chart.

(a) Temperature rising from 20°C to 250°C at 20°C/min.
(b) After reaching 250°C, quenching to 20°C with a dry ice.
(c) Repeating the above (a) and (b) three times.

(3) Calculation method of stereocomplex crystal content:

The stereocomplex crystal content (S) was calculated from a crystal fusion enthalpy ΔHa appeared at a temperature of from 150°C to lower than 190°C and a crystal fusion enthalpy ΔHb appeared at a temperature of from 190°C to lower than 250°C in DSC using the following formula.

$$S=\{\Delta Hb/(\Delta Ha+\Delta Hb)\}\times 100\,(\%)$$

(4) Measurement of ratio (L/D) between L-lactic acid unit and D-lactic acid unit:

L/D was obtained according to the following formula using specific optical rotation (α) measured in a 95/5 (v/v) solution of chloroform/hexafluoro-2-propanol at 25°C.

$$L/D=((\alpha)/320+0.5)/(0.5+(\alpha)/(-320))$$

wherein 320 is a specific optical rotation of pure L-lactic acid, and -320 is a specific optical rotation of pure D-lactic acid.

(5) Degree of randomization:

The degree of randomization (R) was calculated from the following formula.

$$R=\{1-(P1/P2)\}\times 100\ (\%)$$

wherein P1 is integral intensity of III tetrad peak in chemical shift of 5.175 ppm and total integral intensity of tetrad (SIS, SII, IIS, III and ISI) of a methane proton peak appeared in chemical shift of 5.250 to 5.159 ppm, in homonuclear decoupling $^1$H-NMR of a polylactic acid composition measured in a mixed solution of 10 wt% deuterated chloroform/ 1,1,1,2,2,2-hexafluoro-2-propanol =9/1.

In the tetrad, S means syndiotactic diad, and I means isotactic diad.

(6) Electrostatic casting properties of film:

In melt extruding a polylactic acid composition in a film shape, when casting a 210 μm thick film by applying a voltage of 7, 000V between the film and a cooling drum by a wire electrode arranged near a cap portion and at the upper portion of an extruded film, it was judged as to whether a film can be formed in a stable manner without decrease of thickness uniformity at a casting speed of 50 m/min without generation of pinner bubble.
The thickness uniformity was evaluated such that thickness (R μm) of a sample having a length of 5 m is measured with an electronic micrometer, and a sample having a thickness variation value (ΔR) within 7% of R was considered an acceptable sample.
The pinner bubble was judged by visually observing the presence or absence of pinner bubble in the above sample. A sample in which pinner bubble is not observed was considered an acceptable sample.

(7) Measurement of haze:

Haze meter MDH2000, a product of Nippon Denshoku Industries Co., Ltd., was used, and a film having a thickness of 50 μm obtained by melt extruding a polylactic acid composition in a film state was used. Haze was measured according to JIS K7105-1981, 6.4.
When a haze exceeds 10%, it was judged to be poor transparency. When a haze is from 1 to 7%, it was judged that such a film can be used as a transparent film. When a haze is less than 1%, it was judged that such a film can be used as an optical film.

(8) Dimensional stability:

A polylactic acid composition was melt extruded in a film shape, and the film obtained was judged in terms of a heat shrinkage percentage at 150°C. A sample having a shrinkage percentage exceeding 5% or a sample melt shrunk was judged as an unacceptable film on dimensional stability, and a sample having a shrinkage percentage less than 5% was judged as an acceptable film on dimensional stability.

(9) Mechanical properties (strength and elongation) of molded article:

A yarn sample was measured with a tensile tester "TENSIRON", a product of ORIENTEC Co., Ltd., under the conditions of a sample length of 25 cm and a tensile speed of 30 cm/min.
Regarding a film sample, the sample having a width of 1 cm and a length of 10 cm was measured under the condition of a tensile speed of 10 cm/min.

(10) Stereocomplex crystal crystallization ratio (Cr ratio) (%):

X-ray diffraction graphic was recorded on an imaging plate by a transmission method using X-ray diffraction apparatus ROTO FLEX RU 200B, a product of Rikagaku Denki. In the X-ray diffraction graphic obtained, a diffraction intensity profile in an equatorial direction was obtained, and a stereocomplex crystallization ratio (Cr ratio) was obtained from the sum $\sum I_{SCi}$ of integral intensity of each diffraction peak derived from a stereocomplex crystal appeared in the vicinity of 2θ=12.0°, 20.7° and 24.0° and integral intensity $I_{HM}$ of a diffraction peak derived from a homocrystal appeared in the vicinity of 2θ=16.5° according to the following formula. $\sum I_{SCi}$ and $I_{MH}$ were estimated by subtracting background and diffuse scattering due to non-crystalline solid in the diffraction intensity profile in an equatorial direction.

X-ray source: Cu-Kα ray (confocal mirror)
Output: 45 kV, 70 mA
Slit: 1 mm diameter to 0.8 mm diameter
Camera length: 120 mm
Cumulative time: 10 min
Sample: length 3 cm, 35 mg

$$\text{Cr ratio } (\%) = \Sigma I_{SCi} / (\Sigma I_{SCi} + I_{HM}) \times 100$$

wherein $\sum I_{SCi}=I_{sc1}+I_{sc2}I_{sc3}$, $I_{sci}$ (i=1 to 3) is an integral intensity of each diffraction peak in the vicinity of 2θ=12.0°, 20.7° and 24.0°, respectively.

(11) Evaluation of ironing resistance:

A towel having 10 cm square was prepared with a fiber to be tested, and the towel was ironed with an iron having a surface temperature adjusted to 175° for 30 seconds. Heat resistance was judged by change of towel shape, size and texture.
Acceptable: Fusion of a single yarn is not observed, and shape, size and texture of a towel before treatment are maintained good.
Unacceptable: Fusion of a single yarn or thermal deformation of a towel before treatment, and change into rough texture are observed.

(12) Measurement of heat shrinkage percentage at 150°C:

Measured according to JIS L-1013, 8.18, item 2a).

(13) Number of fluff:

A sample having a fiber length of 1,000 m was scanned on a black paper, and the number of fluff was visually counted. A sample having the number of fluff of less than 10 was judged as acceptable, and a sample having the number of fluff of 10 or more was judged as unacceptable.
Where the sample length is less than 1,000 meters, it was converted to the number of fluff per 1,000 meters.

Example 1

Step (1)

A vertical stirring tank (40 liters) with full-zone blade, equipped with a vacuum piping, a nitrogen gas piping, a catalyst addition piping, a lactide solution addition piping and an alcohol initiator addition piping was purged with nitrogen, and 30 parts by weight of L-lactide having purity of 99.5%, 0.9 part by weight of stearyl alcohol and $6.1\times10^{-3}$ part by weight of tin octylate were charged therein. Temperature was elevated to 150°C in an atmosphere of a nitrogen pressure of 106.4 kPa, and at the time that the contents were dissolved, stirring was initiated and the inner temperature was further elevated to 190°C. When the inner temperature exceeds 180°C, the reaction begins. Therefore, the inner temperature was held at 185 to 190°C, and the reaction was continued for 1 hour.
The reaction was further conducted under a nitrogen pressure of 106.4 kPa at the inner temperature of 200 to 210°C for 0.5 hour while stirring. The inner pressure was gradually reduced from ordinary pressure to 600 Pa to hold the state, thereby removing L-lactide. The inner pressure was increased to 200 to 300 kPa as a nitrogen pressure. The melt was extruded into a chip cutter to obtain a columnar chip having a radius of 3 mm and a length of 4 mm of a prepolymer (poly L-lactic acid).

Step (2)

The prepolymer was charged in a hopper, and fed to a shaftless cage type reaction apparatus shown in Fig. 1. The reaction apparatus was filled with 15 parts by weight of the prepolymer over 1 hour while reducing the pressure to 1 kPa. The reaction product was controlled so as to have a temperature of 230°C at an outlet (3) by heating from a jacket sealed with a heat medium. Furthermore, the reaction pressure was held vacuum of 1 kPa by sucking an inner gas by an ejector not shown.
The number of revolution of shafts (4, 5) were controlled so as to have constant rotation of 10 rpm by a motor. The shafts were allowed to rotate edge discs (8, 9), and additionally to rotate a stirring blade (10) and an apertured disc (13), connected and fixed to the edge discs (8, 9). Reduced pressure state of 1 kPa was maintained, removal of low molecular compounds was continued for 30 minutes, and nitrogen was introduced in the reaction apparatus to return the inner pressure to atmospheric pressure.

Step (3)

A piping connected to an exhaust port was disconnected, and 20 parts by weight of D-lactide (purity 99.9%, a product of Musashino Chemical Laboratory, Ltd.) and 0.004 part by weight of tin octylate were added from the opening.

Polymerization was conducted at 240°C under 1 atom for 2 hours to obtain a polylactic acid composition.

Step (4)

Finally, low molecular weight compounds were removed over 1 hour while reducing the inner pressure of the reaction apparatus to 1 kPa to obtain a polylactic acid composition in a molten state. This composition was drawn in a strand shape from a discharge port of the reaction apparatus, and cut into a columnar chip having a radius of 3 mm and a length of 4 mm with a cutter while cooling with an ice cooling bath.

A weight average molecular weight (Mw) and a lactide content of the prepolymer and the polylactic acid composition are shown in Table 1. A stereocomplex crystal melting point (Tm) by repeating DSC three times, a stereocomplex crystal content (S) and a degree of randomization (R) by homonuclear decoupling $^{1}H$-NMR are shown in Table 2.

Example 2

A composition was produced in the same manner as in Examples 1, except for using "LACEA", a product of Mitsui Chemicals, Inc., in place of the prepolymer (poly(L-lactic acid)).

A weight average molecular weight (Mw) and a lactide content of the prepolymer and the polylactic acid composition are shown in Table 1. A stereocomplex crystal melting point (Tm) by repeating DSC three times, a stereocomplex crystal content (S) and a degree of randomization (R) by homonuclear decoupling 1H-NMR are shown in Table 2.

Example 3

A composition was obtained in the same manner as in Example 1 except for changing the initiator to ethylene glycol. Properties of the prepolymer and the polylactic acid composition are shown in Table 1 and Table 2.

Example 4

0.5 part by weight of 3,5-bis(methoxycarbonyl)benzenesulfonic acid tetrabutylphosphonium salt ground into an average particle size of 3 microns was mixed with 100 parts by weight of the polylactic acid composition produced in Example 1 in a nitrogen atmosphere.

The mixture was melt kneaded with a twin-screw extruder having a cylinder temperature of 220°C, and melt extruded into a film of 210 μm at a die temperature of 220°C in a casting rate of 10 m/min. The extruded film was adhered and solidified to a surface of a mirror cooling drum by an electrostatic casting method using a platinum-coated wire electrode.

Thickness uniformity of the film obtained had an acceptable level, and generation of surface defect such as pinner bubble was not observed.

The unstretched film obtained was stretched at 3. 6 times in a vertical direction and 3. 9 times in a horizontal direction at 120°C, and then heat fixed at 150°C to obtain a biaxially stretched film having a thickness of 15 μm.

As a result of DSC measurement of the film sample, it was a good film that a stereocomplex crystal content is 100%, crystallinity by a wide-angle X-ray diffraction method is 45%, a haze is 1%, strength (MD/TD) is 54/55 MPa, an elongation (MD/TD) is 71/72% and a shrinkage percentage is 3% on the (MD/TD) average.

Example 5

The polylactic acid composition produced in Example 2 was vacuum dried at 110°C for 5 hours, melted at 230°C using a twin-screw melt spinning machine with ruder, and discharged from a cap having 168 holes of a discharge port of 0.40 diameter at 250 g/min.

The discharged melts were cooled with a spinning pipe just under the discharge port, and bundled. An oil solution was added to the bundle, and the bundle having the oil solution added thereto was taken up as an unstretched yarn at a rate of 1,000 m/sec.

This unstretched yarn showed a single fusion peak of a stereocomplex crystal in a differential scanning calorimeter (DSC) measurement, and had a melting point of 219°C.

This unstretched yarn was stretched 3.5 times at 70°C, and then heat-set at 180°C to obtain a polylactic acid fiber of 879 dTex/168 fil. Fiber strength was 4.2 cN/dTex, and a shrinkage percentage at 150°C was 2.5%. Thus, the fiber had sufficient strength for uses of clothing materials.

The fiber obtained was knitted into a cylindrical net, and subjected to an ironing test at 175°C. As a result, broken and perforated portion, rough curing, shrinkage and the like were not generated, and the net had sufficient heat resistance.

Example 6

Each of the polylactic acid compositions obtained in Examples 1 to 3 was dried at 110°C for 5 hours, and formed into a molding piece having a thickness of 3 mm for ASTM measurement under the conditions of a cylinder temperature of 220°C, a mold temperature of 110°C, a molding cycle of 100 seconds using an injection molding machine (SG150U, a product of Sumitomo Heavy Industries, Ltd.).

The shortest time that a test piece is surely obtained without deformation was used as a molding cycle. The molding pieces obtained each had good appearance, and did not have any problem. The molding pieces each showed a single crystal melting point (Tm) of 219, 218 and 219°C in DSC.

Comparative Example 1

Step (1)

A vertical stirring tank (40 liters) with full-zone blade, equipped with a vacuum piping, a nitrogen gas piping, a piping for adding a catalyst and a solution of D-lactide having an optical purity of 99.5%, and an alcohol initiator addition piping was purged with nitrogen, and 30 parts by weight of L-lactide, 0.9 part by weight of stearyl alcohol and $6.1\times10^{-3}$ part by weight of tin octylate were charged therein.

Temperature was elevated to 150°C in an atmosphere of a nitrogen pressure of 106.4 kPa, and at the time that the contents were dissolved, stirring was initiated and the inner temperature was further elevated to 190°C. When the inner temperature exceeds 180°C, the reaction begins. Therefore, the inner temperature was held at 185 to 190°C, and the reaction was continued for 1 hour. The reaction was conducted under a nitrogen pressure of 106.4 kPa at the inner temperature of 200 to 210°C for 0.5 hour while stirring, thereby obtaining a prepolymer (poly(L-lactic acid)).

Step (2)

The inner pressure was gradually reduced to 600 Pa from ordinary pressure, the state was held for 30 minutes, and L-lactide was removed.

Step (3)

The inner pressure was returned to ordinary pressure with nitrogen, 30 parts by weight of D-lactide (purity 99.9%, a product of Musashino Chemical Laboratory, Ltd.), and the reaction was conducted at the inner temperature of 220°C for 1 hour to obtain a polylactic acid composition.

Step (4)

The composition was sent to a shaftless cage type reaction apparatus, and L- and D-lactides were removed at 230°C for 1 hour. A weight average molecular weight and a lactide content of the polylactic acid composition are shown in Table 1, and measurement results after repeating DSC three times, and a degree of randomization (R) are shown in Table 2.

TABLE 1

| | Prepolymer | | Polylactic acid composition | |
|---|---|---|---|---|
| | Mw | Lactide content (ppm) | Mw | Lactide content (ppm) |
| Example 1 | $10.1\times10^{-4}$ | 1020 | $16.5\times10^{-4}$ | 1660 |
| Example 2 | $14.6\times10^{-4}$ | 0 | $18.8\times10^{-4}$ | 880 |
| Example 3 | $15.1\times10^{-4}$ | 1440 | $20.8\times10^{-4}$ | 1790 |
| Comparative Example 1 | - | - | $16.7\times10^{-4}$ | 3660 |

TABLE 2

| | Tm (°C) | S (%) | R (%) |
|---|---|---|---|
| Example 1 | 220, 220, 219 | 100, 100, 100 | 0.54 |
| Example 2 | 222, 219, 219 | 100, 100, 100 | 0.48 |
| Example 3 | 214, 213, 213 | 100, 100, 100 | 0.67 |
| Comparative Example 1 | 193, 193, 192 | 100, 100, 100 | 2.89 |

Example 7

100 parts by weight of L-lactide and 0.15 part by weight of stearyl alcohol were charged in a polymerization reactor equipped with a cooling distillation pipe from a raw material charging port thereof under nitrogen stream. The inside of the reactor was replaced with nitrogen five times, and L-lactide was melted at 190°C. At the time that L-lactide was completely melded, 0.05 part by weight of tin 2-ethylhexanoate together with 500 μl of toluene were added from the raw material charging port, and ring-opening polymerization was conducted at 190°C for 1 hour to obtain poly(L-lactic acid).

After completion of the ring-opening polymerization, inner pressure of the reactor was reduced to 133 kPa, and excess L-lactide was removed from the system.

100 parts by weight of D-lactide was charged from the raw material charging port under nitrogen stream. The reactor was maintained at 190°C, and ring-opening reaction was continued for 2 hours. After completion of the polymerization, the reactor was elevated to 230°C, and excess D-lactide was removed while reducing pressure to 133 kPa. Finally, the polylactic acid composition was discharged as a non-crystalline strand from a discharge port of the reactor, and cut into pellets while cooling with water. Mw of the polylactic acid composition just after ring-opening polymerization of L-lactic acid and just after discharging is shown in Table 3. Furthermore, L/D is also shown in Table 3.

The non-crystalline strand of the polylactic acid composition obtained by the above method was allowed to stand in a hot air circulation drier heated to 180°C for 1 hour. The measurement results after repeating DSC of the polylactic acid composition obtained three times, and a stereocomplex crystal content (S) are shown in Table 4.

The polylactic acid composition obtained by the above operation was formed into chips, and vacuum dried at 110°C for 5 hours. The chips were melted at 230°C using a twin-screw melt spinning machine with ruder, and the melt was discharged from a cap having 168 holes of a discharge port of 0.40 diameter at 250 g/min.

The discharged material was cooled with cold air of 10°C in a spinning pipe just under the discharge port. Temperature of filament yarns at 2 meters under the pack was 100°C or lower that is lower than the crystallization initiation temperature. The filament yarns were bundled, an oil solution was added to the bundle, and the bundle was taken up as an unstretched yarn at a rate of 1,000 m/min.

This unstretched yarn showed a single fusion peak of a stereocomplex crystal in DSC measurement. The stereocomplex crystal content (S) was 100%, the stereocomplex crystallization ratio (Cr ratio) was 0%, and the melting point was 220°C.

The unstretched yarn was stretched 3.5 times at 70°C, and then heat set at 180°C to obtain a polylactic acid fiber of 879 dtex/168 fil. The fiber had strength of 3.8 cN/dTex, elongation of 31% and the number of fluff of 2, and showed a single fusion peak of a stereocomplex crystal in DSC measurement. The crystal fusion peak temperature was 220°C, the crystal fusion heat was 45 J/g, and the heat shrinkage percentage at 150°C was 6.5%. Thus, the fiber has sufficient strength for uses as clothing materials.

The stereocomplex crystallization ratio (Cr ratio) by XRD measurement was 98%. The fiber obtained was knitted into a cylindrical net, and subjected to an ironing test at 175°C. As a result, broken and perforated portion, rough curing, shrinkage and the like were not generated, and the net had sufficient ironing resistance (Good).

Example 8

Spinning, stretching and heat setting were conducted in the same manners as in Example 7, except for changing the spinning temperature, the stretching temperature, the stretching ratio and the heat setting temperature to the conditions shown in Table 5.

The unstretched yarn showed a single fusion peak of a stereocomplex crystal in DSC measurement. The stereocomplex crystal content (S) was 100%, the stereocomplex crystallization ratio (Cr ratio) was 0%, and the melting point was 220°C.

Properties of the fiber obtained, heat shrinkage percentage at 150°C, the number of fluff and 175°C ironing heat resistance, are shown in Table 5.

Example 9

Example 7 was followed, except that 0.15 part by weight of stearyl alcohol was changed to 0.2 part by weight of stearyl alcohol. Results obtained are shown in Tales 3 to 5.

Comparative Example 2

100 parts by weight of L-lactide and 0.15 part by weight of stearyl alcohol were charged in a polymerization reactor equipped with a cooling distillation pipe from a raw material charging port thereof under nitrogen stream. The inside of the reactor was replaced with nitrogen five times, and L-lactide was melted at 190°C. At the time that L-lactide was completely melded, 0.05 part by weight of tin 2-ethylhexanoate together with 500 μl of toluene were added from the raw material charging port, and ring-opening polymerization was conducted at 190°C for 1 hour to obtain poly(L-lactic acid).

After completion of the ring-opening polymerization, inner pressure of the reactor was reduced to 133 kPa, and excess L-lactide was removed from the system.

On the other hand, 100 parts by weight of D-lactide and 0.15 part by weight of stearyl alcohol were charged in a polymerization reactor equipped with a cooling distillation pipe from a raw material charging port thereof under nitrogen stream. The inside of the reactor was replaced with nitrogen five times, and D-lactide was melted at 190°C. At the time that D-lactide was completely melded, 0.05 part by weight of tin 2-ethylhexanoate together with 500 μl of toluene were added from the raw material charging port, and ring-opening polymerization was conducted at 190°C for 1 hour to obtain poly(D-lactic acid).

After completion of the ring-opening polymerization, inner pressure of the reactor was reduced to 133 kPa, and excess D-lactide was removed from the system.

50 parts by weight of the poly (L-lactic acid) and 50 parts of the poly (D-lactic acid), obtained by the above operations, and 0.2 part by weight of a phosphoric ester metal salt "ADK STAB NA-21", a product of ADEKA corporation, were kneaded at 225°C in a residence time of 3 minutes using a twin-screw ruder to produce a stereocomplex polylactic acid composition.

Using the composition obtained, spinning, stretching and heat fixation were conducted in the same manners as in Example 7, and fiber formation was attempted. As a result, heat fusion and breakage of yarn frequently occurred at the time of heat setting, and good fiber could not be obtained.

The unstretched yarn showed two fusion peaks in DSC measurement. The stereocomplex crystal content (S) was 95%, the stereocomplex crystallization ratio was 15%, and the melting point was 209°C. Because good stretched yarn was not obtained, measurement of properties of strength, elongation and heat shrinkage percentage was not conducted.

Comparative Example 3

Comparative Example 2 was followed, except that the heat setting condition was changed to 155°C at which fusion and breakage of yarn are not observed. The unstretched yarn showed two fusion peaks in DSC measurement. The stereocomplex crystal content (S) was 95%, the stereocomplex crystallization ratio was 15%, and the melting point was 210°C.

The fiber obtained had strength of 2.6 cN/dTex and elongation of 32%. The stereocomplex crystal content (S) was 95%, but the stereocomplex crystallization ratio was merely 65%. Therefore, the 175°C ironing heat resistance was unacceptable.

Example 10

Spinning, stretching and heat setting were conducted in the same manners as in Example 9, except for blending 0.2 part by weight of Tinubin 840 (a product of Ciba Speciality Chemicals) per 100 parts by weight of the polylactic acid composition.

Fiber strength was 3.8 cN/dTex, elongation was 30%, stereocomplex crystal content (S) and stereocomplex crystallization ratio (Cr ratio) were 100%, crystal fusion heat was 46 J/g, heat shrinkage percentage was 6%, and 175°C ironing heat resistance was good.

Example 11

Spinning, stretching and heat setting were conducted in the same manners as in Example 10, except blending 0.5 part by weight of Irganox 1330 (a product of Ciba Speciality Chemicals) and 0.2 part by weight of Irgafos 168 (a

product of Ciba Speciality Chemicals) per 100 parts by weight of the polylactic acid composition in place of Tinubin 840 (a product of Ciba Speciality Chemicals).

Fiber strength was 3.9 cN/dTex, elongation was 32%, stereocomplex crystal content (S) and stereocomplex crystallization ratio (Cr ratio) were 100%, crystal fusion heat was 45 J/g, heat shrinkage percentage was 5%, and 175°C ironing heat resistance was good.

TABLE 3

| | Mw of poly L-lactic acid (Poly D-lactic acid) ($\times10^4$) | Mw of polylactic acid composition ($\times10^4$) | L/D |
|---|---|---|---|
| Composition of Example 7 | 11.6 | 15.8 | 58.5/41.5 |
| Composition of Example 8 | 17.5 | 19.1 | 64.3/35.7 |
| Composition of Comparative Example 2 | 11.9 (PLLA)<br>18.0 (PDLA) | 15.0 | 49.8/50.2 |

TABLE 4

| | Number of scanning | ΔHb (J/g) | S (%) | Crystal melting point (°C) |
|---|---|---|---|---|
| Composition of Example 7 | First | 59.2 | 100 | 220 |
| | Second | 50.1 | 100 | 219 |
| | Third | 47.7 | 100 | 218 |
| Composition of Example 8 | first | 60.2 | 100 | 219 |
| | Second | 55.4 | 100 | 219 |
| | Third | 51.2 | 100 | 218 |
| Composition of Comparative Example 2 | First | 32.1 | 90 | 205 |
| | Second | 29.9 | 95 | 198 |
| | Third | 28.5 | 100 | 193 |

TABLE 5

| | | Example 7 | Example 8 | Example 9 | Comparative Example 2 | Comparative Example 3 |
|---|---|---|---|---|---|---|
| Yarn-formation conditions | Spinning temperature (°C) | 230 | 240 | 250 | 230 | 230 |
| | Stretching temperature (°C) | 70 | 75 | 90 | 70 | 70 |
| | Heat setting temperature (°C) | 180 | 185 | 185 | 180 | 155 |

(continued)

| | | Example 7 | Example 8 | Example 9 | Comparative Example 2 | Comparative Example 3 |
|---|---|---|---|---|---|---|
| Properties of stretched yarn | Cr ratio (%) | 98 | 100 | 100 | 75 | 65 |
| | Crystal fusion temperature (°C) | 218 | 219 | 219 | 205 | 203 |
| | Crystal fusion heat (J/g) | 45 | 46 | 46 | 35 | 30 |
| | Strength (cN/ dTex) | 3.9 | 3.9 | 3.8 | Note 1 | 3.5 |
| | Elongation (%) | 31 | 30 | 27 | Note 1 | 32 |
| | Number of fluff | 2 | 3 | 3 | Many | 21 |
| | 150°C heat shrinkage percentage (%) | 4.5 | 5 | 4.5 | Note 1 | 10.5 |
| | Ironing resistance | Good | Good | Good | Bad | Bad |
| Note 1: Stretching was impossible. | | | | | | |

**Claims**

**1.** A polylactic acid composition wherein

(i) a ratio (L/D) of an L-lactic acid unit and a D-lactic acid unit is from 30/70 to 70/30;
(ii) a weight average molecular weight (Mw) is from 100,000 to 300,000;
(iii) a stereocomplex crystal content (S) is 80% or more;
(iv) a melting point (Tm) of a stereocomplex crystal is 200°C or higher; and
(v) a degree of randomization (R) is from 0.001 to less than 2.5%,

wherein the stereocomplex crystal content (S) is a value represented by the following formula:

$$S=\{\Delta Hb/(\Delta Ha+\Delta Hb)\}\times 100\,(\%)$$

wherein ΔHa and ΔHb are fusion enthalpy (ΔHa) of crystal melting point appeared at a temperature in a range of from 150°C to less than 190°C and fusion enthalpy (ΔHb) of crystal melting point appeared at a temperature in a range of from 190°C to less than 250°C, in a temperature-rising process of a differential scanning calorimeter (DCS), respectively; and
the degree of randomization (R) is a value represented by the following formula:

$$R=\{1-(P1/P2)\}\times 100\,(\%)$$

wherein P1 and P2 are integral intensity of III tetrad peak in chemical shift of 5.175 ppm and total integral intensity of tetrad (SIS, SII,IIS and ISI) of a methane peak appeared in chemical shift of 5.250 to 5.159 ppm, in homonuclear decoupling $^1$H-NMR of a polylactic acid composition measured in a mixed solution of 10 wt% deuterated chloroform/ 1,1,1,2,2,2- hexafluoro-2-propanol=9/1; and in the tetrad, S means syndiotactic diad, and I means isotactic diad.

**2.** The polylactic acid composition as claimed in claim 1, wherein the degree of randomization (R) is from 0.001 to 2%.

3. The polylactic acid composition as claimed in claim 1, wherein the degree of randomization (R) is from 0.001 to 1%.

4. The polylactic acid composition as claimed in claim 1, wherein the weight average molecular weight (Mw) is from 150,000 to 300,000.

5. The polylactic acid composition as claimed in claim 1, wherein the total content of L-lactide and D-lactide is from 100 to 10,000 ppm.

6. A method for producing a polylactic acid composition comprising:

(1) a step of polymerizing lactic acid (A) or lactide (A) to obtain a prepolymer;
(2) a step of removing residual lactide in the prepolymer;
(3) a step of polymerizing lactic acid (B) or lactide (B) in the presence of the prepolymer to obtain a polylactic acid composition; and
(4) a step of removing residual lactide in the polylactic acid composition,

wherein a lactic acid unit constituting the lactic acid (A) or the lactide (A), and a lactic acid unit constituting the lactide (B) are optical antipodes;
the steps (2) to (4) are conducted using a cylindrical shaftless cage type reaction apparatus having the following (a) to (e):

(a) an inlet and an outlet of a reaction substance in the vicinity of both edges,
(b) rotatable edge disks provided at both edges in the reaction apparatus so as to face with each other,
(c) apertured disks having an aperture at the central portion thereof, provided between the edge disks,
(d) stirring blades provided between the edge disk and the apertured disk and between the apertured disks, and provided so as to closely contact with or come close to the inner peripheral wall face of the reaction apparatus along a longitudinal direction of the shaftless cage type reaction apparatus, and
(e) free surface-forming members provided on an extended line of the stirring blade toward inside the reaction apparatus;

the steps (2) to (4) are conducted at a temperature of from 180 to 260°C under a pressure of from 1 to 13.3 kPa; and the step (3) is conducted at a temperature of from 190 to 280°C for from 10 minutes to 10 hours.

7. The method for producing a polylactic acid composition as claimed in claim 6, wherein a reactive terminal group of the prepolymer is a hydroxyl group or a carboxyl group, the prepolymer has a weight average molecular weight of from 30,000 to 200,000, the total content of L-lactic acid and D-lactic acid is 500 ppm or less, and the total content of L-lactide and D-lactide is from 1 to 10,000 ppm.

8. The method for producing a polylactic acid composition as claimed in claim 6, wherein the step (1) is a step of obtaining the prepolymer by direct polycondensation of lactic acid or melt ring-opening polymerization of lactide.

9. A molded article comprising the polylactic acid composition as claimed in any one of claims 1 to 5.

10. A molded article as claimed in claim 9, which is selected from the group consisting of films, sheets and fibers.

11. A polylactic acid fiber comprising the polylactic acid composition as claimed in claim 1, showing only a single fusion peak derived from a stereocomplex crystal in a differential scanning calorimeter (DSC) measurement, having fusion heat of from 40 to 80 J/g and fusion peak temperature of 195°C or higher, and satisfying the following requirements:

1) the number of fluff is less than 10 in terms of fiber length of 1,000 meters;
2) 175°C ironing resistance is satisfied;
3) strength is 3.5 cN/dTex or more, and elongation is from 25 to 50%; and
4) a stereocomplex crystallization ratio (Cr) by a wide-angle X-ray diffraction method (XRD) measurement is 90% or more,

wherein the stereocomplex crystallization ratio (Cr) is a value represented by the following formula:

-

$$\text{Cr ratio } (\%) = \Sigma I_{SCi} / (\Sigma I_{SCi} + I_{HM}) \times 100 \qquad (1)$$

wherein $\Sigma I_{SCi} = I_{sc1} + I_{sc2} I_{sc3}$ herein $I_{sci}$ (i=1 to 3) is integral intensity of each diffraction peak in the vicinity of 2θ=12.0°, 20.7° and 24.0°, respectively, and $I_{HM}$ is integral intensity of a diffraction peak derived from a polylactic acid homocrystal.

**12.** The polylactic acid fiber as claimed in claim 11, which is obtained by melt spinning the polylactic acid composition as claimed in claim 1, wherein a stereocomplex crystal content (S) is 90% or more, and a stereocomplex crystallization ratio (Cr) by (XRS) measurement is substantially zero.

**13.** The polylactic acid fiber as claimed in claim 12, wherein the stereocomplex crystal content (S) is substantially 100%, and the stereocomplex crystallization ratio (Cr) by (XRS) measurement is substantially zero.

**14.** The polylactic acid fiber as claimed in claim 11, wherein the total amount of metal elements contained is 100 ppm or less.

**15.** A fiber product comprising the polylactic acid fiber as claimed in any one of claims 11 to 14.

**16.** A method for producing the polylactic acid fiber as claimed in claim 12, which comprises, in melt spinning the polylactic acid composition as claimed in claim 1, setting a cap temperature to a temperature of from 220 to 290°C, quenching a filament yarn with cold air of 40°C or lower such that temperature of the filament yarn at 3 meters under the cap is a crystallization temperature or lower, and spinning in a spinning rate of from 300 to 5,000 m/min to obtain an unstretched yarn.

**17.** A method for producing the polylactic acid fiber as claimed in claim 11, which comprises stretching the unstretched yarn as claimed in claim 16 from 3 to 10 times within a temperature range of from the glass transition temperature of a polylactic acid to 170°C, and heat fixing within a temperature range of from 170 to 220°C to obtain a stretched yarn.

Fig. 1

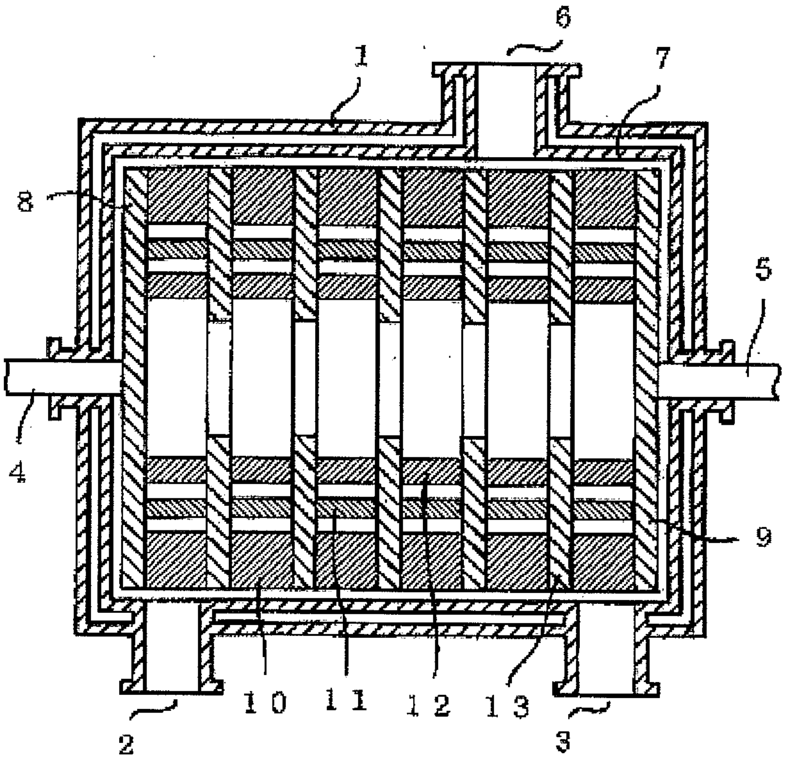

Fig. 2

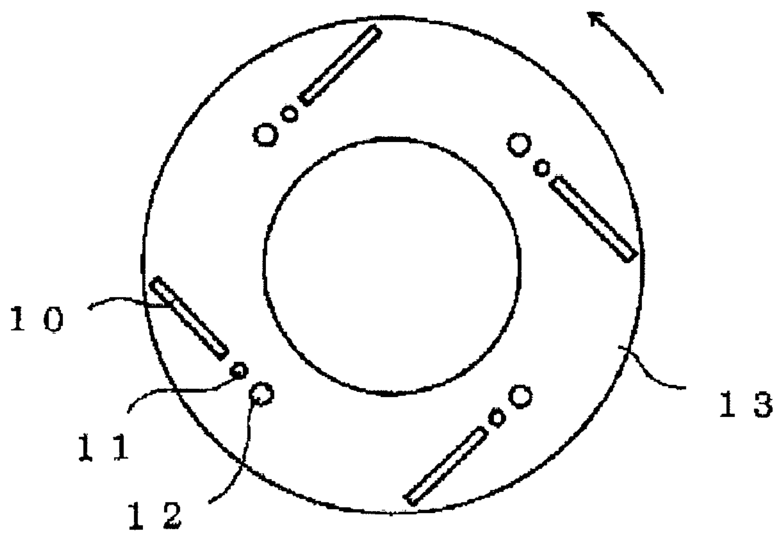

**INTERNATIONAL SEARCH REPORT**

International application No.
PCT/JP2008/056629

A. CLASSIFICATION OF SUBJECT MATTER
*C08L67/04*(2006.01)i, *C08G63/06*(2006.01)i, *D01F6/62*(2006.01)i, *C08L101/16*(2006.01)n

According to International Patent Classification (IPC) or to both national classification and IPC

B. FIELDS SEARCHED

Minimum documentation searched (classification system followed by classification symbols)
C08L67/04, C08G63/06-63/08, D01F6/62, C08L101/16, C08J5/00, C08J5/18

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | WO 2007/083780 A1 (Teijin Ltd.), 26 July, 2007 (26.07.07), Claims; page 12, line 13 to page 16, line 21; examples 14 to 15; Figs. 1 to 2 (Family: none) | 1-10 |
| P,X | WO 2008/018474 A1 (Teijin Ltd.), 14 February, 2008 (14.02.08), Claims; page 4, line 6 to page 9, line 27; examples (Family: none) | 1-5,9-15 |
| A | JP 2002-356543 A (Toray Industries, Inc.), 13 December, 2002 (13.12.02), Claims; Par. Nos. [0023] to [0060], [0071]; examples (Family: none) | 1-17 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 May, 2008 (28.05.08) | 10 June, 2008 (10.06.08) |
| Name and mailing address of the ISA/ Japanese Patent Office | Authorized officer |
| Facsimile No. | Telephone No. |

Form PCT/ISA/210 (second sheet) (April 2007)

**INTERNATIONAL SEARCH REPORT**

International application No.
PCT/JP2008/056629

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-500982 A (E.I. Du Pont De Nemours & Co.), 25 February, 1993 (25.02.93), Claims; examples 6, 20, 23 & US 5028667 A & WO 91/05001 A1 | 1-17 |
| A | JP 2006-70102 A (Musashino Chemical Laboratory, Ltd.), 16 March, 2006 (16.03.06), Claims; examples & EP 1780234 A1 & WO 2006/009285 A1 | 1-17 |
| A | JP 2004-26876 A (Mitsui Chemicals, Inc.), 29 January, 2004 (29.01.04), Claims; examples (Family: none) | 1-17 |
| A | JP 2006-299244 A (Wakayama-Ken), 02 November, 2006 (02.11.06), Claims; examples (Family: none) | 1-17 |
| A | JP 2007-70750 A (Teijin Ltd.), 22 March, 2007 (22.03.07), Claims; examples (Family: none) | 1-17 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 63241024 A
- JP 2003192884 A
- JP 2002356543 A
- JP 2003293220 A
- JP 2005023512 A


### Non-patent literature cited in the description


- *Macromolecules,* 1991, vol. 24, 5651
- *Seni Gakkai Preprints,* 1989